(19) Europäisches Patentamt / European Patent Office / Office européen des brevets

(11) **EP 4 343 408 A1**

(12) **EUROPEAN PATENT APPLICATION**

(43) Date of publication:
**27.03.2024 Bulletin 2024/13**

(21) Application number: **23195681.4**

(22) Date of filing: **06.09.2023**

(51) International Patent Classification (IPC):
**G02B 27/01** (2006.01)

(52) Cooperative Patent Classification (CPC):
**G02B 27/0101**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **06.09.2022 CN 202211085946**

(71) Applicants:
• **Neusoft Group Co., Ltd.**
  **Shenyang PRC 110179 (CN)**
• **Neusoft Corporation**
  **Shenyang PRC 110179 (CN)**
• **Neusoft Group Dalian Co., Ltd**
  **Dalian PRC 116085 (CN)**

(72) Inventors:
• **Li, Junhua**
  **Shenyang, 110179 (CN)**
• **Pan, Xiaoxu**
  **Shenyang, 110179 (CN)**
• **Wang, Yulong**
  **Shenyang, 110179 (CN)**
• **Li, Xin**
  **Shenyang, 110179 (CN)**
• **Kang, Shufang**
  **Shenyang, 110179 (CN)**

(74) Representative: **Fish & Richardson P.C.**
**Highlight Business Towers**
**Mies-van-der-Rohe-Straße 8**
**80807 München (DE)**

(54) **AUGMENTED REALITY-HEAD UP DISPLAY IMAGING METHODS AND APPARATUSES, DEVICES, AND STORAGE MEDIA**

(57) This application discloses augmented reality-head up display imaging methods and apparatuses, devices, and storage media. The method includes the following: information about a target object is obtained; coordinates, of a current human eye point, in a head up display device coordinate system are obtained; a parameter of a near plane used for imaging is determined based on the coordinates of the current human eye point, coordinates of a center point of a virtual image display region, and a parameter of the virtual image display region, where the near plane is coplanar with a plane of the virtual image display region, and the coordinates of the center point of the virtual image display region and the parameter of the virtual image display region are determined based on an optical-mechanical parameter of a head up display device; a virtual image of the target object is generated through OpenGL imaging based on the coordinates of the current human eye point, the parameter of the near plane, and the information about a target object; and the virtual image of the target object is displayed in the virtual image display region based on the coordinates of the center point of the virtual image display region, the parameter of the virtual image display region, and the parameter of the near plane.

EP 4 343 408 A1

FIG. 3

**Description**

**TECHNICAL FIELD**

This application relates to the field of image processing technologies, and in particular, to augmented reality-head up display imaging methods and apparatuses, devices, and storage media.

**BACKGROUND**

An augmented reality-head up display (AR-HUD) is one of many types of head up display (HUD) devices. An AR-HUD technology brings a secure AR-HUD function to the automotive field. An imaging principle of the AR-HUD function implemented by the AR-HUD technology is to use a windshield to produce a virtual image in front of an automobile and utilize a three-dimensional (3D) imaging technology to achieve augmented reality user experience, where the virtual image (that is, a displayed object) can change a position and a size by following an ever-changing real-world scene such as a front automobile, a pedestrian, or a crossing. The AR-HUD technology can further project important information (such as an automobile speed, navigation information, a traffic sign, and other information) displayed by an instrument onto a front windshield during a driving process of the automobile, so that a driver does not have to look down to see the information in the instrument.

However, the AR-HUD technology is limited by an optical principle. Imaging is performed, by using the AR-HUD technology, on an actual object to obtain the virtual image. When a human eye observes the virtual image in different angles or different positions, that is, after a human eye point is moved, the human line of sight can bypass and be away from the virtual image to see the actual object, visually the virtual image and the actual object cannot be displayed in a fitting manner, and there is a positional deviation between the virtual image and the actual object, resulting in a relatively poor AR experience effect.

**SUMMARY**

This application provides augmented reality-head up display imaging methods and apparatuses, devices, and storage media, so that there can be no positional deviation between a target object and a virtual image, and the target object and the virtual image are displayed in a fitting manner, thereby improving an AR experience effect.

According to a first aspect, this application provides an augmented reality-head up display imaging method, including the following: information about a target object is obtained; coordinates, of a current human eye point, in a head up display device coordinate system are obtained; a parameter of a near plane used for imaging is determined based on the coordinates of the current human eye point, coordinates of a center point of a virtual image display region, and the parameter of the virtual image display region, where the near plane is coplanar with a plane of the virtual image display region, and the coordinates of the center point of the virtual image display region and the parameter of the virtual image display region are determined based on an optical-mechanical parameter of a head up display device; a virtual image of the target object is generated through OpenGL imaging based on the coordinates of the current human eye point, the parameter of the near plane, and the information about a target object; and the virtual image of the target object is displayed in the virtual image display region based on the coordinates of the center point of the virtual image display region, the parameter of the virtual image display region, and the parameter of the near plane.

Optionally, the parameter of the virtual image display region includes a normal line of the plane of the virtual image display region and a size of the virtual image display region, and the parameter of the near plane includes coordinates of a center point of the near plane and a size of the near plane; and that a parameter of a near plane used for imaging is determined based on the coordinates of the current human eye point, coordinates of a center point of a virtual image display region, and the parameter of the virtual image display region includes the following: coordinates of a projection point of the current human eye point in the plane of the virtual image display region are determined based on the coordinates of the current human eye point, the coordinates of the center point of the virtual image display region, and the normal line of the plane of the virtual image display region, and the coordinates of the projection point of the current human eye point in the plane of the virtual image display region are determined as the coordinates of the center point of the near plane; and the size of the near plane is determined based on the size of the virtual image display region, the coordinates of the center point of the virtual image display region, and the coordinates of the center point of the near plane.

Optionally, that coordinates of a projection point of the current human eye point in the plane of the virtual image display region are determined based on the coordinates of the current human eye point, the coordinates of the center point of the virtual image display region, and the normal line of the plane of the virtual image display region includes the following: a plane equation of the virtual image display region is constructed based on the normal line of the plane of the virtual image display region, the coordinates of the center point of the virtual image display region, and the coordinates, to be determined, of the projection point of the current human eye point in the plane of the virtual image display region; a linear equation constructed by the current human eye point and the projection point of the current human eye point in the plane of the virtual image display region is obtained based on the normal line of the plane of the virtual image display region, the coordinates of the current human eye point, and the coordinates, to be determined, of the projection point of the current human eye point in the plane of the virtual image display region; and the plane equation of the virtual image display region and the linear equation are solved, to obtain the coordinates of the projection point of the current human eye point in the plane of the virtual image display region.

Optionally, that the size of the near plane is determined based on the size of the virtual image display region, the coordinates of the center point of the virtual image display region, and the coordinates of the center point of the near plane includes the following: the size of the near plane is obtained based on the size of the virtual image display region, the coordinates of the center point of the virtual image display region, and the coordinates of the center point of the near plane through the following equation, where the size of the near plane includes a width and a height of the near plane; the width of the near plane is: 2 |BC| cosθ + a width of the virtual image display region; the height of the near plane is: 2 |BC| sinθ + a height of the virtual image display region; and |BC| is a modulus of a vector constructed by the center point C of the virtual image display region and the center point B of the near plane, and θ is an included angle between the vector and a horizontal coordinate axis of the near plane.

Optionally, the parameter of the near plane includes the coordinates of the center point of the near plane and the size of the near plane; and that a virtual image of the target object is generated based on the coordinates of the current human eye point, the parameter of the near plane, and the information about a target object includes the following: a view frustum used for OpenGL imaging is obtained based on the coordinates of the current human eye point, virtual image resolution, the coordinates of the center point of the near plane, the size of the near plane, and a normal line of the near plane; and the virtual image of the target object is generated by using the view frustum based on the information about a target object.

Optionally, that the virtual image of the target object is displayed in the virtual image display region based on the coordinates of the center point of the virtual image display region, the parameter of the virtual image display region, and the parameter of the near plane includes the following: a position relationship between the center point of the virtual image display region and the center point of the near plane is determined based on the coordinates of the center point of the virtual image display region and the coordinates of the center point of the near plane; a target virtual image that has the same size as the virtual image display region is obtained through tailoring based on the position relationship between the center point of the virtual image display region and the center point of the near plane, from the virtual image of the target object, where the center point of the virtual image display region is a center point of the target virtual image; and the target virtual image is displayed in the virtual image display region.

Optionally, that a position relationship between the center point of the virtual image display region and the center point of the near plane is determined based on the coordinates of the center point of the virtual image display region and the coordinates of the center point of the near plane includes the following: a uv coordinate system is established by using a vertex at an upper left corner of the near plane as an origin of coordinates and using a right side of the origin of coordinates as a u axis positive direction and a lower part of the origin of coordinates as a v axis positive direction; and the position relationship between the center point of the virtual image display region and the center point of the near plane is determined based on the coordinates of the center point of the virtual image display region and the coordinates of the center point of the near plane; and that a target virtual image that has the same size as the virtual image display region is obtained through tailoring based on the position relationship between the center point of the virtual image display region and the center point of the near plane, from the virtual image of the target object includes the following: tailoring is performed starting from the origin of coordinates if the center point of the near plane is located in a lower right part of the center point of the virtual image display region, to obtain, through tailoring, the target virtual image from the virtual image of the target object; tailoring is performed starting from first coordinates of the near plane if the center point of the near plane is located in an upper right part of the center point of the virtual image display region, to obtain, through tailoring, the target virtual image from the virtual image of the target object, where the first coordinates are (0, h-ih), h is the height of the near plane, and ih is the height of the virtual image display region; tailoring is performed starting from second coordinates of the near plane if the center point of the near plane is located in an upper left part of the center point of the virtual image display region, to obtain, through tailoring, the target virtual image from the virtual image of the target object, where the second coordinates are (w-iw, h-ih), w is the height of the near plane, and iw is the height of the virtual image display region; tailoring is performed starting from third coordinates of the near plane if the center point of the near plane is located in a lower left part of the center point of the virtual image display region, to obtain, through tailoring, the target virtual image from the virtual image of the target object, where the third coordinates are (w-iw, 0); and the virtual image of the target object is determined as the target virtual image if the center point of the near plane coincides with the center point of the virtual image display region.

Optionally, that coordinates, of a current human eye point, in a head up display device coordinate system are obtained includes the following: coordinates, of the current human eye point, in a sensor coordinate system is obtained through a sensor; and the coordinates, of the current human eye point, in the sensor coordinate system are rotated and translated based on a rotation matrix and a translation matrix that are between the sensor coordinate system and the head up display device coordinate system, to obtain the coordinates, of the current human eye point, in the head up display device coordinate system.

According to a second aspect, this application provides an augmented reality-head up display imaging apparatus, including the following: a first acquisition module configured to obtain information about a target object; a second acquisition module configured to obtain coordinates, of a current human eye point, in a head up display device coordinate system; a determining module configured to determine, based on the coordinates of the current human eye point, coordinates of a center point of a virtual image display region, and the parameter of the virtual image display region, a parameter of a near plane used for imaging, where the near plane is coplanar with a plane of the virtual image display region, and the coordinates of the center point of the virtual image display region and the parameter of the virtual image display region are determined based on an optical-mechanical parameter of a head up display device; a generation module configured to generate a virtual image of the target object based on the coordinates of the current human eye point, the parameter of the near plane, and the information about a target object; and a display module configured to display the virtual image of the target object in the virtual image display region based on the coordinates of the center point of the virtual image display region, the parameter of the virtual image display region, and the parameter of the near plane.

According to a third aspect, this application provides a head up display device, including: a processor; and a memory configured to store executable instructions in the processor, where the processor is configured to perform the augmented reality-head up display imaging method according to any one of the first aspect or the possible implementations of the first aspect.

According to a fourth aspect, an embodiment of this application provides a computer-readable storage medium, storing a computer program. The computer program implements the augmented reality-head up display imaging method according to any one of the first aspect or the possible implementations of the first aspect when executed by a processor.

According to a fifth aspect, an embodiment of this application provides a computer program product, including a computer program. The computer program implements the augmented reality-head up display imaging method according to any one of the first aspect or the possible implementations of the first aspect when executed by a processor.

According to the augmented reality-head up display imaging methods, apparatuses, devices, and storage media provided in this application, when augmented reality-head up display imaging is performed on the target object, the coordinates, of the current human eye point, in the head up display device coordinate system are obtained, and the parameter of the near plane used for imaging is determined based on the coordinates of the current human eye point, the coordinates of the center point of the virtual image display region, and the parameter of the virtual image display region, where the near plane is coplanar with the plane of the virtual image display region. Then, the virtual image of the target object is generated based on the coordinates of the current human eye point, the parameter of the near plane, and the information about a target object. Finally, the virtual image of the target object is displayed in the virtual image display region based on the coordinates of the center point of the virtual image display region, the parameter of the virtual image display region, and the parameter of the near plane. An intersection point of the near plane and a connection line between the coordinates of the current human eye point and the target object is a position of the virtual image of the target object according to an OpenGL imaging principle because the virtual image of the target object is generated based on the coordinates of the current human eye point, the parameter of the near plane, and the information about a target object through OpenGL imaging. Therefore, the virtual image, of the target object, generated through OpenGL imaging, is located in the near plane, and there is no positional deviation between the generated virtual image of the target object and the target object. In addition, only a virtual image of a target object in a visual region of the current human eye point can be displayed in the virtual image display region, and the near plane is coplanar with the virtual image display region. Therefore, for the target object in the visual region in the current human eye point, the virtual image, of the target object, generated through OpenGL imaging, is located in the virtual image display region, and there is no positional deviation between the generated virtual image of the target object and the target object. In this way, visually the virtual image and the target object can be displayed in a fitting manner. It ensures a good AR experience effect.

**BRIEF DESCRIPTION OF DRAWINGS**

FIG. 1 is a schematic diagram of an application scenario of an augmented reality-head up display imaging method according to one or more embodiments of this application;
FIG. 2 is a schematic diagram of a structure of a head up display device;
FIG. 3 is a flowchart illustrating an augmented reality-head up display imaging method, according to one or more embodiments of this application;

FIG. 4 is a schematic diagram of a theoretical optical-mechanical parameter of a head up display device, according to one or more embodiments of this application;

FIG. 5 is a schematic diagram of a view frustum in an augmented reality-head up display imaging method, according to one or more embodiments of this application;

FIG. 6 is a schematic diagram of a relationship between a virtual image display region and a near plane in an augmented reality-head up display imaging method, according to one or more embodiments of this application;

FIG. 7 is a schematic diagram of a position relationship between a center point of a virtual image display region and a center point of a near plane in an augmented reality-head up display imaging method, according to one or more embodiments of this application;

FIG. 8 is a schematic diagram of comparison between an existing view frustum constructed by using an OpenGL imaging technology and a view frustum constructed by using a method according to this application;

FIG. 9 is a schematic diagram of a display effect, of a virtual image, obtained when a current human eye point is located in a theoretical eye point;

FIG. 10 is a schematic diagram of a display effect of a virtual image;

FIG. 11 is a schematic diagram of a display effect of another virtual image, according to one or more embodiments of this application;

FIG. 12 is a schematic diagram of a structure of an augmented reality-head up display imaging apparatus, according to one or more embodiments of this application; and

FIG. 13 is a schematic diagram of a structure of a head up display device, according to one or more embodiments of this application.

## DESCRIPTION OF EMBODIMENTS

The following describes in detail the embodiments of this application, and examples of the embodiments are shown in the accompanying drawings. The examples described below with reference to the accompanying drawings are exemplary, and are only used to explain this application but should not be construed as a limitation to this application.

The terms "first", "second", and so on in the specification, the claims, and the accompanying drawings in the embodiments of this application are intended to distinguish between similar objects but do not necessarily indicate a specific order or sequence. It should be understood that the data used in such a way can be exchanged under proper conditions to make it possible to, for example, implement the described embodiments of this application in sequences except those illustrated or described here. Moreover, the terms "include", "contain", and any other variants mean to cover the non-exclusive inclusion, for example, a process, method, system, product, or device that includes a list of steps or units is not necessarily limited to those steps or units which are clearly listed, but may include other steps or units not expressly which are listed or inherent to such a process, method, system, product, or device.

First, some terms in the embodiments of this application are explained and described, to facilitate understanding by a person skilled in the art.

1. Augmented reality (augmented reality, AR) is also referred to as mixed reality, where the AR uses a computer technology to apply virtual information to a real world, and a real environment and a virtual object are superimposed on a same picture or space in real time and exist at the same time. The AR provides information that is, in general, different from what humans can perceive. The AR not only shows real-world information, but also displays virtual information at the same time, with the two types of information complementing and overlaying each other.

2. Eye point position is a viewpoint position of a driver, and an eye point may refer to a midpoint between left and right eye points of the driver, or an intersection point of a centerline of the driver and a connection line between centers of ellipses of left and right eyes of the driver.

In the existing technology, when imaging is performed by using an AR-HUD technology, when a human eye observes a virtual image in different angles or different positions, that is, after a human eye point is moved, the human line of sight can bypass and be away from the virtual image to see an actual object, visually the virtual image and the actual object cannot be displayed in a fitting manner, and there is a positional deviation between the virtual image and the actual object, resulting in a relatively poor AR experience effect.

To resolve this problem, embodiments of this application provide augmented reality-head up display imaging methods, apparatuses, devices, and storage media. When augmented reality-head up display imaging is performed on a target object, coordinates, of a current human eye point, in a head up display device coordinate system are obtained, and a parameter of a near plane used for imaging is determined based on the coordinates of the current human eye point, coordinates of a center point of a virtual image display region, and the parameter of the virtual image display region, where the near plane is coplanar with a plane of the virtual image display region. Then, a virtual image of the target object is generated based on the coordinates of the current human eye point, the parameter of the near plane, and the information about a target object. Finally, the virtual image of the target object is displayed in the virtual image display region based on the coordinates of the center point of the virtual image display region, the parameter of the virtual image display region, and the parameter of the near plane. In the embodiments of this application, an intersection point of the near plane and a connection line between the coordinates of the current human eye point and the target object is a position of the virtual image of the target object according to an OpenGL imaging principle because the virtual image of the target object is generated based on the coordinates of the current human eye point, the parameter of the near plane, and the information about a target object through OpenGL imaging. Therefore, the virtual image, of the target object, generated through OpenGL imaging, is located in the near plane, and there is no positional deviation between the generated virtual image of the target object and the target object. In addition, only a virtual image of a target object in a visual region of the current human eye point can be displayed in the virtual image display region, and the near plane is coplanar with the virtual image display region. Therefore, for the target object in the visual region in the current human eye point, the virtual image, of the target object, generated through OpenGL imaging, is located in the virtual image display region, and there is no positional deviation between the generated virtual image of the target object and the target object. In this way, visually the virtual image and the target object can be displayed in a fitting manner. It ensures a good AR experience effect. In the embodiments of this application, the near plane is determined based on the coordinates of the current human eye point, the coordinates of the center point of the virtual image display region, and the parameter of the virtual image display region, that is, the near plane changes as the current human eye point moves. However, the near plane is always coplanar with the virtual image display region, and only a virtual image of a target object in a visual region of the current human eye point can be displayed in the virtual image display region. Therefore, it can be maintained that the human eye point, any target point in the virtual image, and a target point in the target object (where the target point may correspond to any target point in the virtual image) are coplanar, and there is no positional deviation between the virtual image and the target object. The current human eye point moves, but the virtual image display region does not move. Therefore, the virtual image moves in the virtual image display region as the eye point moves, visually representing that the virtual image and the target object are displayed in a fitting manner. It ensures a good AR experience effect.

Next, application scenarios involved in the embodiments of this application are described by using an example.

The augmented reality-head up display imaging method provided in the embodiments of this application can be applied to at least the following application scenarios. The following provides descriptions with reference to the accompanying drawings.

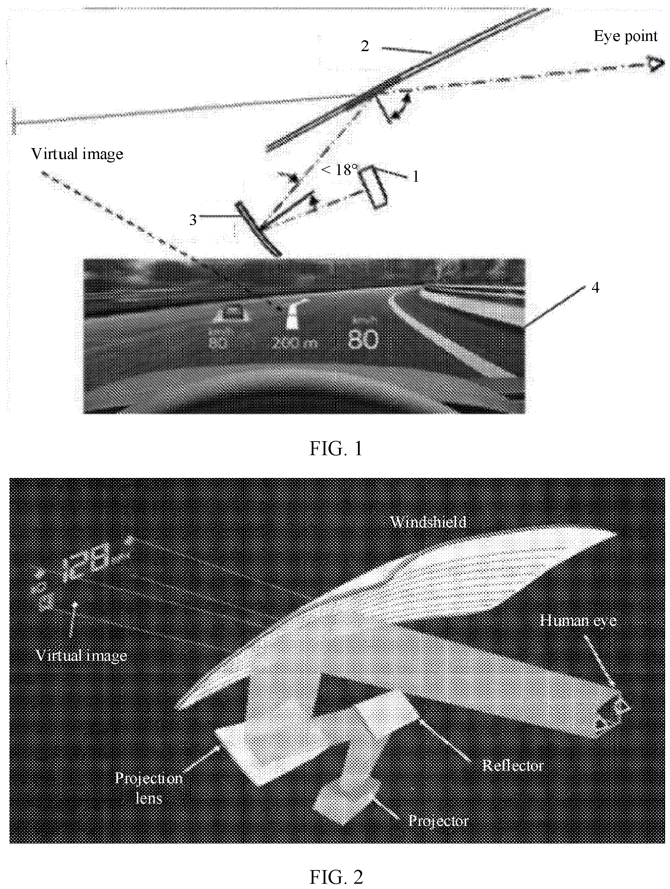

For example, FIG. 1 is a schematic diagram of an application scenario of an augmented reality-head up display imaging method, according to one or more embodiments of this application. As shown in FIG. 1, a head up display device 1 and a windshield 2 are involved. The head up display device 1 may include a projection apparatus, a reflector, and a projection lens 3 (such as an aspheric lens). In one or more embodiments, the head up display device 1 can be disposed in an automobile cab, and a front windshield 2 is disposed relative to a driver seat. A part of an image 4 in FIG. 1 is a diagram of an actual AR display effect. The head up display device 1 is configured to generate a light beam of a virtual image, the projection lens 3 is configured to reflect the light beam to the windshield 2, and the light beam enters eyes of the driver (that is, an eye point) after being reflected by the windshield 2. The driver can see the virtual image displayed from the windshield 2.

Optionally, the head up display device 1 may be an AR-HUD. A presented virtual image projected by the AR-HUD to the windshield 2 can be located right ahead a visual field of the driver. Compared with a conventional HUD, the AR-HUD further has an augmented reality function in addition to projecting important information (such as an automobile speed, navigation information, a traffic sign, and other information) displayed by an instrument in a driving process of an automobile, and the virtual image can change by following an ever-changing real-world scene such as a front automobile, a pedestrian, a crossing, and a direction of travel navigation arrow. Optionally, the AR-HUD can present an AR layer and an indication/identifier layer on the windshield 2.

For example, FIG. 2 is a schematic diagram of a structure of a head up display device. As shown in FIG. 2, the head up display device may include a projection lens, a reflector, and a projector. A presented virtual image projected by the head up display device to a windshield can be located right ahead a visual field of a human eye.

The augmented reality-head up display imaging method provided in the embodiments of this application can be used for the head up display device 1, and mainly relates to a process of how to generate the virtual image and display the virtual image. The augmented reality-head up display imaging method provided in the embodiments of this application can enable the virtual image to move in a virtual image display region as an eye point moves, visually representing that the virtual image and a target object are displayed in a fitting manner. It ensures a good AR experience effect.

The eye point in the embodiments of this application refers to a midpoint between left and right eye points of a driver, or an intersection point of a centerline of the driver and a connection line between centers of ellipses of left and right eyes of the driver.

The technical solution of this application and how to resolve the above-mentioned technical problem by using the technical solution of this application are described below in detail with specific embodiments. The following several specific embodiments may be combined with each other, and the same or similar concepts or processes may be omitted for simplicity in some embodiments. The embodiments of this application are described below in combination with the accompanying drawings.

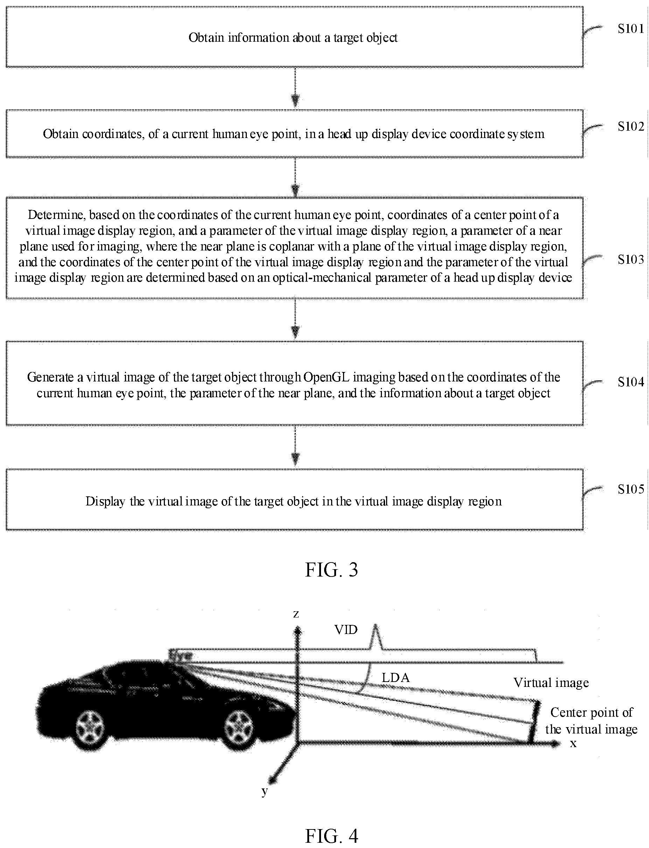

FIG. 3 is a flowchart illustrating an augmented reality-head up display imaging method, according to one or more embodiments of this application. As shown in FIG. 3, the method in the one or more embodiments may include the following:

S101: Obtain information about a target object.

Specifically, the target object is an actual object or character to be imaged, such as a front automobile, a pedestrian, a crossing, a street lamp, or a direction of travel navigation arrow. Optionally, the information about a target object may include position information and attribute information. The position information of the target object may refer to coordinates of the target object, for example, three-dimensional coordinates in an automobile coordinate system. The attribute information of the target object refers to a type of the target object, where for example, the target object is a pedestrian, a signpost, a crossing, a direction of travel navigation arrow, or a front automobile.

S102: Obtain coordinates, of a current human eye point, in a head up display device coordinate system.

Optionally, it can be implemented in the following: coordinates, of the current human eye point, in a sensor coordinate system is obtained through a sensor; then the coordinates, of the current human eye point, in the sensor coordinate system are rotated and translated based on a rotation matrix and a translation matrix that are between the sensor coordinate system and the head up display device coordinate system, to obtain the coordinates, of the current human eye point, in the head up display device coordinate system.

In one or more implementable methods, a driver monitor system (Driver Monitor System, DMS) can be used to obtain the coordinates, of the current human eye point, in the sensor coordinate system. Optionally, the coordinates of the current human eye point can alternatively be obtained by using another sensor in the embodiments.

For example, the rotation matrix between the sensor coordinate system and the head up display device coordinate system is R, the translation matrix is T, and translation of the coordinates can be performed by using the following equation:

$$\begin{bmatrix} x_{arhud} \\ y_{arhud} \\ z_{arhud} \end{bmatrix} = R \begin{bmatrix} x_{dms} \\ y_{dms} \\ z_{dms} \end{bmatrix} + T$$

$x_{dms}$, $y_{dms}$, and $z_{dms}$ are the coordinates, of the current human eye point, in the sensor coordinate system. $x_{arhud}$, $y_{arhud}$, and $z_{arhud}$ are the coordinates, of the current human eye point, in the head up display device coordinate system.

S 103: Determine, based on the coordinates of the current human eye point, coordinates of a center point of a virtual image display region, and the parameter of the virtual image display region, a parameter of a near plane used for imaging, where the near plane is coplanar with a plane of the virtual image display region, and the coordinates of the center point of the virtual image display region and the parameter of the virtual image display region are determined based on an optical-mechanical parameter of a head up display device.

Specifically, that the coordinates of the center point of the virtual image display region and the parameter of the virtual image display region are determined based on an optical-mechanical parameter of a head up display device may be as follows: The determined coordinates of the center point of the virtual image display region and the determined parameter of the virtual image display region are stored after the coordinates of the center point of the virtual image display region and the parameter of the virtual image display region are determined based on the optical-mechanical parameter of the head up display device.

Optionally, determining the coordinates of the center point of the virtual image display region and the parameter of the virtual image display region based on the optical-mechanical parameter of the head up display device may be specifically as follows:

S1: Obtain the optical-mechanical parameter of the head up display device.

The optical-mechanical parameter of the head up display device includes a virtual image distance (Virtual Image Distance, VID), a field of view (FOV), a look down angle (Look down angle, LDA), a yaw, and a normal line of a plane in the virtual image display region, and further include coordinates of an eye point, a roll (Roll), and resolution of an optical-mechanical imaging part. The following describes in detail some parameters of optical-mechanical parameters of a head up display device with reference to FIG. 4. FIG. 4 is a schematic diagram of a theoretical optical-mechanical parameter of a head up display device, according to one or more embodiments of this application. As shown in FIG. 4, an optical-mechanical parameter in the embodiments may include coordinates of an eye point, a virtual image distance, virtual image resolution, a field of view, a look down angle, and a yaw. The coordinates of the eye point are coordinates (x, y, z) at a position of "Eye" shown in FIG. 4. The virtual image and the center point of the virtual image display region are shown in FIG. 4. The virtual image distance is VID shown in FIG. 4. The look down angle is LDA shown in FIG. 4.

Specifically, the optical-mechanical parameter of the head up display device can be obtained through an AR-HUD. The optical-mechanical parameter to be obtained includes the coordinates of the eye point, the virtual image distance (VID), the virtual image resolution, the field of view (FOV), the look down angle (LDA), the yaw, a normal line of a plane of the virtual image display region, and resolution of an optical-mechanical imaging part. Specifically, two types of methods, namely, a design value and measurement, may be used. Use of the design value demands no tolerance or a negligible tolerance. Measurement can be implemented by performing photographing by a robotic arm or can be implemented as manual target measurement. The method of obtaining the above-mentioned optical-mechanical parameter is not limited in the embodiments of this application.

It is worthwhile to note that, the coordinates, of the eye point, in the above-mentioned obtained optical-mechanical parameter are theoretical coordinates of the eye point.

S2: Determine coordinates of the center point of the virtual image display region and the parameter of the virtual image display region based on the coordinates of the eye point, the VID, the yaw, and the LDA.

Specifically, the based coordinates of the eye point are the theoretical coordinates, of the eye point, obtained in S1, and the coordinates of the center point of the virtual image display region can be obtained through calculation by using the following equation:

An x axis coordinate of the center point of the virtual image display region is an x axis coordinate, namely, VID, in the coordinates of the eye point.

A y axis coordinate of the center point of the virtual image display region is $\dfrac{VID}{\tan(Yaw)}$ .

A z axis coordinate of the center point of the virtual image display region is a z axis coordinate, namely, $\dfrac{VID}{\tan(LDA)}$ , in the coordinates of the eye point.

VID is a virtual image distance, Yaw is a yaw, and LDA is a look down angle.

That is, the coordinates of the center point of the virtual image display region are obtained to be (x axis coordinate, namely, VID, in the coordinates of the eye point, $\dfrac{VID}{\tan(Yaw)}$ , z axis coordinate, namely, $\dfrac{VID}{\tan(LDA)}$ , in the coordinates of the eye point).

A size of the virtual image display region can be obtained, based on the coordinates of the eye point, the coordinates of the center point of the virtual image display region, and an FOV, through calculation by using the following equation:

A width of the virtual image display region is Ptan ($\dfrac{1}{2}FOVH$ ), and a height of the virtual image display region is Ptan ($\dfrac{1}{2}FOVV$ ).

P is a virtual image display distance. The virtual image display distance is determined based on the coordinates of the center point of the virtual image display region and the coordinates of the eye point, and may be specifically a distance between the center point of the virtual image display region and the eye point. For example, the eye point is Eye, and the center point of the virtual image display region is Target. In this case, the virtual image display distance is *Target-Eye*. F0VH is a horizontal component of the FOV, and FOVV is a vertical component of the FOV.

The normal line of the plane of the virtual image display region can be obtained based on the coordinates of the center point of the virtual image display region and the size of the virtual image display region after the coordinates of the center point of the virtual image display region and the size of the virtual image display region are obtained. Therefore, a parameter of the virtual image display region is obtained. The parameter of the virtual image display region includes the size of the virtual image display region and the normal line of the plane of the virtual image display region.

In one or more implementable methods, a parameter of a near plane includes coordinates of a center point of the near plane and a size of the near plane. Determining, based on the coordinates of the current human eye point, coordinates of a center point of a virtual image display region, and the parameter of the virtual image display region, a parameter of a near plane used for imaging in S103 may specifically include the following:

S1031: Determine coordinates of a projection point of the current human eye point in the plane of the virtual image display region based on the coordinates of the current human eye point, the coordinates of the center point of the virtual image display region, and the normal line of the plane of the virtual image display region, and determine the coordinates of the projection point of the current human eye point in the plane of the virtual image display region as the coordinates of the center point of the near plane.

Specifically, it can be implemented that the plane of the virtual image display region is coplanar with the near plane because the coordinates of the projection point of the current human eye point in the plane of the virtual image display region are determined as the coordinates of the center point of the near plane.

Optionally, determining coordinates of a projection point of the current human eye point in the plane of the virtual image display region based on the coordinates of the current human eye point, the coordinates of the center point of the virtual image display region, and the normal line of the plane of the virtual image display region in S1031 may be specifically the following:

S10311: Construct a plane equation of the virtual image display region based on the normal line of the plane of the virtual image display region, the coordinates of the center point of the virtual image display region, and the coordinates, to be determined, of the projection point of the current human eye point in the plane of the virtual image display region.

The constructed plane equation of the virtual image display region may be shown in Equation (1):

$$a\,(B.x - C.x) + b\,(B.y - C.y) + c\,(B.z - C.z) = 0 \qquad (1),$$

wherein a, b, and c are normal lines of the plane of the virtual image display region. B.x, B.y, and B.z are the coordinates, to be determined, of the projection point (which is assumed to be a point B) of the current human eye point in the plane of the virtual image display region. C.x, C.y, and C.z are the coordinates of the center point (which is assumed to be a point C) of the virtual image display region.

S10312: Obtain, based on the normal line of the plane of the virtual image display region, the coordinates of the current human eye point, and the coordinates, to be determined, of the projection point of the current human eye point in the plane of the virtual image display region, a linear equation constructed by the current human eye point and the projection point of the current human eye point in the plane of the virtual image display region.

The linear equation constructed by the current human eye point and the projection point of the current human eye point in the plane of the virtual image display region may be shown in Equation (2):

$$\frac{Eye.x - B.x}{a} = \frac{Eye.y - B.y}{b} = \frac{Eye.z - B.z}{c} = t \qquad (2),$$

wherein Eye.x, Eye.y, and Eye.z are the coordinates of the current human eye point, a, b, and c are normal lines of the plane of the virtual image display region. T is a parameter to be determined.

S10313: Solve the plane equation of the virtual image display region and the linear equation, to obtain the coordinates of the projection point of the current human eye point in the plane of the virtual image display region.

Specifically, a plane equation, of the virtual image display region, shown in Equation (1) and a linear equation shown in Equation (2) are solved, to obtain coordinates (B.x, B.y, B.z) of the projection point of the current human eye point in the plane of the virtual image display region.

S1032: Determine the size of the near plane based on the size of the virtual image display region, the coordinates of the center point of the virtual image display region, and the coordinates of the center point of the near plane.

Optionally, S1032 may be specifically the following: obtaining the size of the near plane based on the size of the virtual image display region, the coordinates of the center point of the virtual image display region, and the coordinates of the center point of the near plane through the following formula, where the size of the near plane includes a width and a height of the near plane; the width of the near plane is: 2 |BC| cosθ + a width of the virtual image display region; the height of the near plane is: 2 |BC| sinθ + a height of the virtual image display region; and |BC| is a modulus of a vector constructed by the center point C of the virtual image display region and the center point B of the near plane, and θ is an included angle between the vector and a horizontal coordinate axis of the near plane.

S104: Generate a virtual image of the target object through OpenGL imaging based on the coordinates of the current human eye point, the parameter of the near plane, and the information about a target object.

Optionally, S104 may be specifically the following:

S1041: Obtain a view frustum used for OpenGL imaging based on the coordinates of the current human eye point, virtual image resolution, the coordinates of the center point of the near plane, the size of the near plane, and a normal line of the near plane.

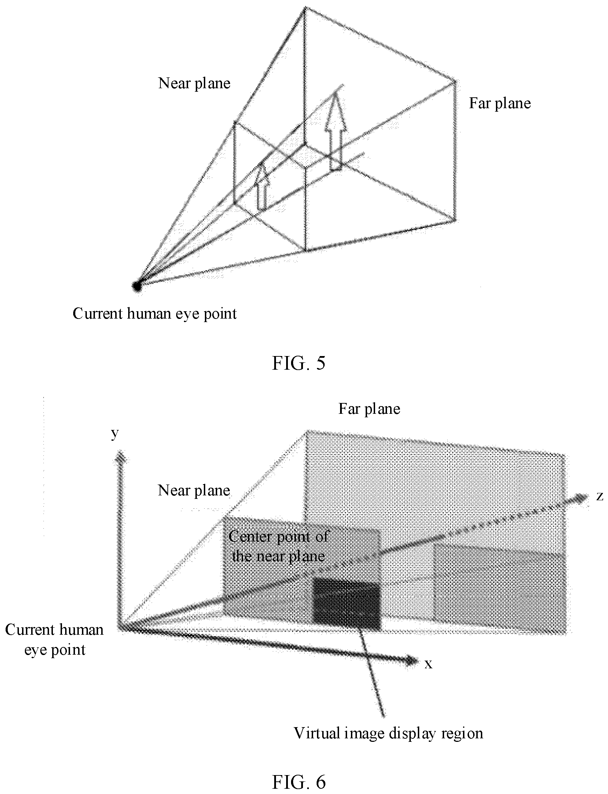

The following describes an obtained view frustum used for OpenGL imaging with reference to FIG. 5. FIG. 5 is a schematic diagram of a view frustum in an augmented reality-head up display imaging method, according to one or more embodiments of this application. As shown in FIG. 5, the view frustum used for OpenGL imaging is a right square pyramid that uses a current human eye point as a vertex and uses a far plane as a bottom. Virtual image resolution is obtained in step S 1. A size of a near plane includes a width and a height of the near plane. A near plane distance is a distance between the current human eye point and a center point of the near plane. A distance between the near plane and the far plane may be equal to the near plane distance. Values of the two may be a predetermined value of a head up display device. For example, the near plane distance is 200 meters, that is, a virtual image is displayed within a distance of 200 meters to a human eye point.

S 1042: Generate the virtual image of the target object by using the view frustum based on the information about a target object.

Specifically, position information of the target object refers to coordinates of the target object, for example, three-dimensional coordinates in an automobile coordinate system, and attribute information of the target object refers to a type of the target object, where for example, the target object is a pedestrian, a signpost, a crossing, a direction of travel navigation arrow, or a front automobile. When the virtual image of the target object is generated based on the information about a target object by using the view frustum, for example, when a type of the target object is a direction of travel navigation arrow, the virtual image of the target object is a navigation arrow. When the virtual image of the target object is generated, imaging is performed in the near plane based on coordinates of the target object and coordinates of the current human eye point. A space region between the near plane and the far plane is an imaging region. The virtual image of the target object can be generated in the near plane when the target object is located in the imaging region.

S105: Display the virtual image of the target object in the virtual image display region based on the coordinates of the center point of the virtual image display region, the parameter of the virtual image display region, and the parameter of the near plane.

Specifically, the virtual image of the target object needs to be displayed in the virtual image display region after the virtual image of the target object is generated in S104. It is worthwhile to note that, the virtual image display region is a display region set based on coordinates of a theoretical eye point, and the virtual image display region that is already set does not change even if a human eye point moves. The following describes a relationship between a virtual image display region and a near plane with reference to the FIG. 6. FIG. 6 is a schematic diagram of a relationship between a virtual image display region and a near plane in an augmented reality-head up display imaging method, according to one or more embodiments of this application. As shown in FIG. 6, a black region in FIG. 6 is the virtual image display region, a right square pyramid constructed by using a current human eye point as a vertex is a view frustum, a bottom of the view frustum is a far plane, and an intermediate plane is the near plane. After the current human eye point moves from a position of the theoretical eye point to another position, a corresponding view frustum used for OpenGL also changes in the embodiments. As shown in FIG. 6, the near plane is greater than an original virtual image display region. It is worthwhile to note that the near plane coincides with the virtual image display region in the embodiments if the current human eye point coincides with the theoretical eye point.

With reference to FIG. 6, a size of the virtual image of the target object is the same as a size of the near plane after the virtual image of the target object is generated in S104. In addition, only a virtual image of a target object in a visual region of the current human eye point can be displayed in the virtual image display region. That is, a virtual image generated for an object located outside the visual region of the current human eye point is located in a region other than the virtual image display region in the near plane. Therefore, the virtual image of the target object needs to be tailored in the embodiments, to obtain a part of virtual image that coincides with the virtual image display region. The following provides implementable methods of tailoring.

In one or more implementable methods, S105 may be specifically the following:

S1051: Determine the position relationship between the center point of the virtual image display region and the center point of the near plane based on the coordinates of the center point of the virtual image display region and the coordinates of the center point of the near plane.

S1052: Obtain, through tailoring based on the position relationship between the center point of the virtual image display region and the center point of the near plane, a target virtual image that has the same size as the virtual image display region from the virtual image of the target object, where the center point of the virtual image display region is a center point of the target virtual image.

S1053: Display the target virtual image in the virtual image display region.

Further, in one or more implementable methods, determining the position relationship between the center point of the virtual image display region and the center point of the near plane based on the coordinates of the center point of the virtual image display region and the coordinates of the center point of the near plane in S1051 may be specifically the following: establishing a uv coordinate system by using a vertex at an upper left corner of the near plane as an origin of coordinates and using a right side of the origin of coordinates as a u axis positive direction and a lower part of the origin of coordinates as a v axis positive direction, and determining the position relationship between the center point of the virtual image display region and the center point of the near plane based on the coordinates of the center point of the virtual image display region and the coordinates of the center point of the near plane.

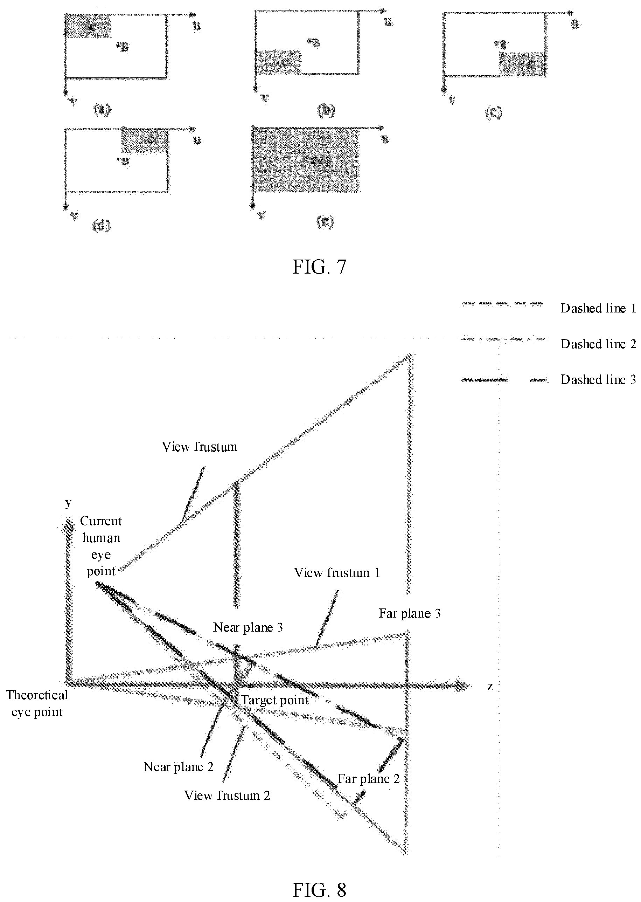

Specifically, there are five position relationships between the center point of the virtual image display region and the center point of the near plane. The following provides a description with reference to FIG. 7. FIG. 7 is a schematic diagram of a position relationship between a center point of a virtual image display region and a center point of a near plane in an augmented reality-head up display imaging method, according to one or more embodiments of this application. As shown in FIG. 7, a uv coordinate system is established by using a vertex at an upper left corner of the near plane as an origin of coordinates and using a right side of the origin of coordinates as a u axis positive direction and a lower part of the origin of coordinates as a v axis positive direction. A point B is the center point of the near plane. A point C is the center point of the virtual image display region. A u coordinate axis is a horizontal coordinate axis of the near plane. A v coordinate axis is a vertical coordinate axis of the near plane. There are five position relationships, as shown in FIG. 7, between the point B and the point C.

    (a) The center point (point B) of the near plane is located in a lower right part of the center point (point C) of the virtual image display region.
    (b) The center point (point B) of the near plane is located in an upper right part of the center point (point C) of the virtual image display region.
    (c) The center point (point B) of the near plane is located in an upper left part of the center point (point C) of the virtual image display region.
    (d) The center point (point B) of the near plane is located in a lower left part of the center point (point C) of the virtual image display region.
    (e) The center point (point B) of the near plane coincides with the center point (point C) of the virtual image display region.

Correspondingly, obtaining, through tailoring based on the position relationship between the center point of the virtual image display region and the center point of the near plane, a target virtual image that has the same size as the virtual image display region from the virtual image of the target obj ect in S1052 may be specifically implemented in the following five methods:

Method 1: Tailoring is performed starting from the origin of coordinates if the center point of the near plane is located in the lower right part of the center point of the virtual image display region, to obtain, through tailoring, the target virtual image from the virtual image of the target object. As shown in FIG. 7(a), a gray part is the target virtual image obtained through tailoring.
Method 2: Tailoring is performed starting from first coordinates of the near plane if the center point of the near plane is located in the upper right part of the center point of the virtual image display region, to obtain, through tailoring, the target virtual image from the virtual image of the target object, where the first coordinates are (0, h-ih), h is a height of the near plane, and ih is a height of the virtual image display region. As shown in FIG. 7(b), a gray part is the target virtual image obtained through tailoring.
Method 3: Tailoring is performed starting from second coordinates of the near plane if the center point of the near plane is located in the upper left part of the center point of the virtual image display region, to obtain, through tailoring, the target virtual image from the virtual image of the target object, where the second coordinates are (w-iw, h-ih), w is a height of the near plane, and iw is a height of the virtual image display region. As shown in FIG. 7(c), a gray part is the target virtual image obtained through tailoring.
Method 4: Tailoring is performed starting from third coordinates of the near plane if the center point of the near plane is located in the lower left part of the center point of the virtual image display region, to obtain, through tailoring, the target virtual image from the virtual image of the target object, where the third coordinates are (w-iw, 0). As shown in FIG. 7(d), a gray part is the target virtual image obtained through tailoring.
Method 5: The virtual image of the target object is determined as the target virtual image if the center point of the near plane coincides with the center point of the virtual image display region. As shown in FIG. 7(e), a gray part is the target virtual image.

The following describes in detail, with reference to FIG. 8, a principle of an augmented reality-head up display imaging method, according to one or more embodiments of this application. FIG. 8 is a schematic diagram of comparison between an existing view frustum constructed by using an OpenGL imaging technology and a view frustum constructed by using a method according to this application. As shown in FIG. 8, each view frustum is shown in a cross-sectional diagram. A view frustum constructed based on a theoretical eye point is a view frustum 1, outlined by a dashed line 1, in FIG. 8. In the view frustum 1, an actual region shown by a first vertical line closest to an origin of coordinates is a near plane of the view frustum 1, and is the virtual image display region described in the embodiments of this application. After an eye point moves, for example, to a position of a current human eye point shown in FIG. 8, a view frustum constructed by using an existing technology is a view frustum 2 outlined by a dashed line 2. It can be seen that a near plane 2 of the view frustum 2 rotates relative to the near plane (namely, the virtual image display region) of the view frustum 1, and the near plane 2 is not coplanar with the virtual image display region. Consequently, an image displayed in the near plane of the view frustum 1 is an error image after imaging is performed on the near plane 2, and there is a positional deviation between the virtual image of the target object and the target object. A view frustum constructed by using the above-mentioned augmented reality-head up display imaging method according to the embodiments of this application is a view frustum 3, outlined by a solid line, shown in FIG. 8. A near plane 3 is coplanar with the virtual image display region. In the view frustum 3, based on an OpenGL imaging principle, if the target object is located in an imaging region of the view frustum 3, the imaging region is a space region constructed between a near plane 3 and a far plane 3, and an intersection point of the near plane 3 and a connection line between coordinates of the current human eye point and the target object is a position of the virtual image of the target object. Therefore, the virtual image, of the target object, generated through OpenGL imaging, is located in the near plane, and there is no positional deviation between the generated virtual image of the target object and the target object. In addition, as shown in FIG. 8, in a triangle region outlined by a dashed line 3 from the current human eye point, a trapezoid region is a visual region of the current human eye point. Only a virtual image of a target object in the visual region of the current human eye point can be displayed in the virtual image display region, and the near plane is coplanar with the virtual image display region. Therefore, for the target object in the visual region of the current human eye point, the virtual image, of the target object, generated through OpenGL imaging is located in the virtual image display region, and there is no positional deviation between the generated virtual image of the target object and the target object. In this way, visually the virtual image and the target object can be displayed in a fitting manner. It ensures a good AR experience effect. In the embodiments of this application, the near plane is determined based on the coordinates of the current human eye point, the coordinates of the center point of the virtual image display region, and the parameter of the virtual image display region, that is, the near plane changes as the current human eye point moves. However, the near plane is always coplanar with the virtual image display region, and only a virtual image of a target object in a visual region of the current human eye point can be displayed in the virtual image display region. Therefore, it can be maintained that the human eye point, any target point in the virtual image, and a target point in the target object (where the target point may correspond to any target point in the virtual image) are coplanar, and there is no positional deviation between the virtual image and the target object. The current human eye point moves, but the virtual image display region does not move. Therefore, the virtual image moves in the virtual image display region as the eye point moves, visually representing that the virtual image and the target object are displayed in a fitting manner. It ensures a good AR experience effect.

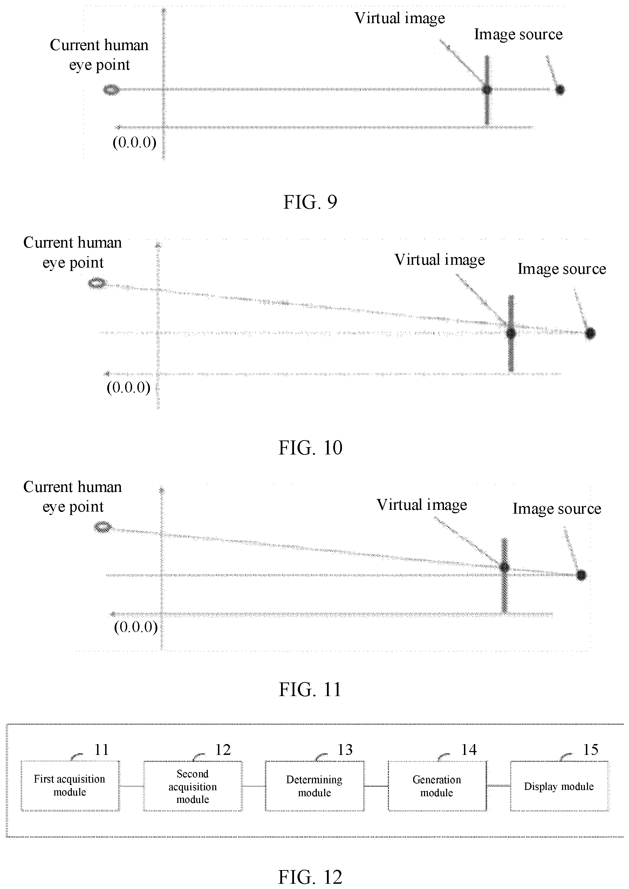

The following describes a position relationship between a virtual image and a target object in different cases with reference to FIG. 9 to FIG. 11.

FIG. 9 is a schematic diagram of a display effect of a virtual image when a current human eye point is located at a theoretical eye point. As shown in FIG. 9, an example in which the target object is a point is used. After imaging is performed by using an augmented reality-head up display imaging method, the virtual image, the target object, and the current human eye point are located at a straight line. Therefore, there is no positional deviation between the target object and the virtual image, and the virtual image and the target object are displayed in a fitting manner.

After the current human eye point moves from a position of a theoretical eye point, cases other than e shown in FIG. 7 are implemented. If an existing AR-HUD technology is used for imaging, a case shown in FIG. 10 appears. FIG. 10 is a schematic diagram of a display effect of a virtual image. As shown in FIG. 10, when a current human eye point moves to a position shown in FIG. 10, an example in which a target object is a point is used. An eye point, a virtual image, and the target object that are obtained by using the existing AR-HUD technology for imaging are not on a straight line, the human line of sight may bypass and be away from the virtual image and see the target object, and there is a positional deviation between the target object and the virtual image. A display effect shown in FIG. 11 can be achieved by using the above-mentioned augmented reality-head up display imaging method according to the embodiments of this application. FIG. 11 is a schematic diagram of a display effect of another virtual image, according to one or more embodiments of this application. As shown in FIG. 11, an example in which a target object is a point is used. After imaging is performed by using the augmented reality-head up display imaging method, a virtual image, the target object, and a current human eye point are on a straight line. Therefore, there is no positional deviation between the target object and the virtual image, and the virtual image and the target object are displayed in a fitting manner.

According to the augmented reality-head up display imaging methods provided in the embodiments, when augmented reality-head up display imaging is performed on the target object, the coordinates, of the current human eye point, in the head up display device coordinate system are obtained, and the parameter of the near plane used for imaging is determined based on the coordinates of the current human eye point, the coordinates of the center point of the virtual image display region, and the parameter of the virtual image display region, where the near plane is coplanar with the plane of the virtual image display region. Then, the virtual image of the target object is generated based on the coordinates of the current human eye point, the parameter of the near plane, and the information about a target object. Finally, the virtual image of the target object is displayed in the virtual image display region based on the coordinates of the center point of the virtual image display region, the parameter of the virtual image display region, and the parameter of the near plane. An intersection point of a connection line between the coordinates of the current human eye point and the target object and the near plane is a position of the virtual image of the target object according to an OpenGL imaging principle because the virtual image of the target object is generated based on the coordinates of the current human eye point, the parameter of the near plane, and the information about a target object through OpenGL imaging. Therefore, the virtual image, of the target object, generated through OpenGL imaging, is located in the near plane, and there is no positional deviation between the generated virtual image of the target object and the target object. In addition, only a virtual image of a target object in a visual region of the current human eye point can be displayed in the virtual image display region, and the near plane is coplanar with the virtual image display region. Therefore, for the target object in the visual region in the current human eye point, the virtual image, of the target object, generated through OpenGL imaging, is located in the virtual image display region, and there is no positional deviation between the generated virtual image of the target object and the target object. In this way, visually the virtual image and the target object can be displayed in a fitting manner. It ensures a good AR experience effect.

The following are apparatus embodiments of this application, which can be used to perform the method embodiments of this application. For details not disclosed in the apparatus embodiments of this application, references can be made to the method embodiments of this application.

FIG. 12 is a schematic diagram of a structure of an augmented reality-head up display imaging apparatus, according to one or more embodiments of this application. As shown in FIG. 12, the apparatus in the embodiments may include: a first acquisition module 11, a second acquisition module 12, a determining module 13, a generation module 14, and a display module 15, where the first acquisition module 11 is configured to obtain information about a target object; the second acquisition module 12 is configured to obtain coordinates, of a current human eye point, in a head up display device coordinate system; and the determining module 13 is configured to determine, based on the coordinates of the current human eye point, coordinates of a center point of a virtual image display region, a parameter of the virtual image display region, a parameter of a near plane used for imaging, where the near plane is coplanar with a plane of the virtual image display region, and the coordinates of the center point of the virtual image display region and the parameter of the virtual image display region are determined based on an optical-mechanical parameter of a head up display device; the generation module 14 is configured to generate a virtual image of the target object based on the coordinates of the current human eye point, the parameter of the near plane, and the information about target object; and the display module 15 is configured to display the virtual image of the target object in the virtual image display region based on the coordinates of the center point of the virtual image display region, the parameter of the virtual image display region, and the parameter of the near plane.

Optionally, the parameter of the virtual image display region includes a normal line of the plane of the virtual image display region and a size of the virtual image display region, and the parameter of the near plane includes coordinates of a center point of the near plane and a size of the near plane; and the determining module 13 is configured to: determine coordinates of a projection point of the current human eye point in the plane of the virtual image display region based on the coordinates of the current human eye point, the coordinates of the center point of the virtual image display region, and the normal line of the plane of the virtual image display region, and determine the coordinates of the projection point of the current human eye point in the plane of the virtual image display region as the coordinates of the center point of the near plane; and determine the size of the near plane based on the size of the virtual image display region, the coordinates of the center point of the virtual image display region, and the coordinates of the center point of the near plane.

Optionally, the determining module 13 is specifically configured to: construct a plane equation of the virtual image display region based on the normal line of the plane of the virtual image display region, the coordinates of the center point of the virtual image display region, and the coordinates, to be determined, of the projection point of the current human eye point in the plane of the virtual image display region; obtain, based on the normal line of the plane of the virtual image display region, the coordinates of the current human eye point, and the coordinates, to be determined, of the projection point of the current human eye point in the plane of the virtual image display region, a linear equation constructed by the current human eye point and the projection point of the current human eye point in the plane of the virtual image display region; and solve the plane equation of the virtual image display region and the linear equation, to obtain the coordinates of the projection point of the current human eye point in the plane of the virtual image display region.

Optionally, the determining module 13 is specifically configured to: obtain the size of the near plane based on the size of the virtual image display region, the coordinates of the center point of the virtual image display region, and the coordinates of the center point of the near plane through the following equation, where the size of the near plane includes a width and a height of the near plane; the width of the near plane is: $2 |BC| \cos\theta$ + a width of the virtual image display region; the height of the near plane is: $2 |BC| \sin\theta$ + a height of the virtual image display region; and $|BC|$ is a modulus of a vector constructed by the center point C of the virtual image display region and the center point B of the near plane, and $\theta$ is an included angle between the vector and a horizontal coordinate axis of the near plane.

Optionally, the generation module 14 is configured to: obtain a view frustum used for OpenGL imaging based on the coordinates of the current human eye point, virtual image resolution, the coordinates of the center point of the near plane, the size of the near plane, and a normal line of the near plane; and generate the virtual image of the target object by using the view frustum based on the information about a target object.

Optionally, the display module 15 is configured to: determine a position relationship between the center point of the virtual image display region and the center point of the near plane based on the coordinates of the center point of the virtual image display region and the coordinates of the center point of the near plane; obtain, through tailoring based on the position relationship between the center point of the virtual image display region and the center point of the near plane, a target virtual image that has the same size as the virtual image display region from the virtual image of the target object, where the center point of the virtual image display region is a center point of the target virtual image; and display the target virtual image in the virtual image display region.

Optionally, the display module 15 is specifically configured to: establish a uv coordinate system by using a vertex at an upper left corner of the near plane as an origin of coordinates and use a right side of the origin of coordinates as a u axis positive direction and a lower part of the origin of coordinates as a v axis positive direction; determine the position relationship between the center point of the virtual image display region and the center point of the near plane based on the coordinates of the center point of the virtual image display region and the coordinates of the center point of the near plane; and perform tailoring starting from the origin of coordinates if the center point of the near plane is located in a lower right part of the center point of the virtual image display region, to obtain, through tailoring, the target virtual image from the virtual image of the target object; perform tailoring starting from first coordinates of the near plane if the center point of the near plane is located in an upper right part of the center point of the virtual image display region, to obtain, through tailoring, the target virtual image from the virtual image of the target object, where the first coordinates are (0, h-ih), h is the height of the near plane, and ih is the height of the virtual image display region; perform tailoring starting from second coordinates of the near plane if the center point of the near plane is located in an upper left part of the center point of the virtual image display region, to obtain, through tailoring, the target virtual image from the virtual image of the target object, where the second coordinates are (w-iw, h-ih), w is the height of the near plane, and iw is the height of the virtual image display region; perform tailoring starting from third coordinates of the near plane if the center point of the near plane is located in a lower left part of the center point of the virtual image display region, to obtain, through tailoring, the target virtual image from the virtual image of the target object, where the third coordinates are (w-iw, 0); or determine the virtual image of the target object as the target virtual image if the center point of the near plane coincides with the center point of the virtual image display region.

Optionally, the second acquisition module 12 is configured to: obtain coordinates, of the current human eye point, in a sensor coordinate system through a sensor; and rotate and translate the coordinates, of the current human eye point, in the sensor coordinate system based on a rotation matrix and a translation matrix that are between the sensor coordinate system and the head up display device coordinate system, to obtain the coordinates, of the current human eye point, in the head up display device coordinate system.

The apparatuses provided in the embodiments of this application can perform the above-mentioned method embodiments. For a specific implementation principle and a technical effect, references may be made to the above-mentioned method embodiments, and details are omitted here for simplicity in the embodiments.

It is worthwhile to note that, division of the modules of the above apparatus is merely logical function division, and in actual implementations, the modules may be all or partially integrated into one physical entity, or may be physically separated. In addition, these modules may all be implemented in a form of software invoked by using a processing element; or may all be implemented in a form of hardware; or some modules may be implemented in a form of software invoked by using a processing element, and some modules are implemented in a form of hardware. For example, the processing module may be an independently disposed processing element, or may be integrated into a chip of the above-mentioned apparatus for implementation. In addition, the processing module may be alternatively stored in a form of program code into a memory of the above-mentioned apparatus, and a processing element of the above-mentioned apparatus invokes and performs a function of the processing module. Implementations of the other modules are similar thereto. In addition, these modules may be all or partially integrated, or may be implemented independently. The processing element here may be an integrated circuit, having a signal processing capability. In an implementation process, the steps of the above method or the above modules may be performed through an integrated logic circuit of hardware of an element in the processor or through instructions in the form of software.

For example, the above modules may be configured as one or more integrated circuits for implementing the above method, for example, one or more application-specific integrated circuits (ASICs), one or more microprocessors, digital signal processors (DSPs), or one or more field programmable gate arrays (FPGAs). For another example, when a certain module above is implemented in a form of scheduling program code by using the processing element, the processing element may be a general-purpose processor, for example, a central processing unit (CPU) or another processor that can invoke program code. For another example, these modules may be integrated together, and implemented in a form of a system-on-a-chip (SOC).

The above-mentioned embodiments can be all or partially implemented by software, hardware, firmware, or any combination thereof. When the embodiments are implemented by software, the embodiments can be all or partially implemented in the form of a computer program product. The computer program product includes one or more computer instructions. When the computer program instructions are loaded and executed on a computer, the procedure or functions according to the embodiments of this application are all or partially generated. The computer can be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, and microwave) manner. The computer-readable storage medium can be any usable medium accessible by the computer, or a data storage device, such as a server or a data center, integrating one or more usable media. The usable medium may be a magnetic medium (such as a floppy disk, a hard disk, or a magnetic tape), an optical medium (such as a DVD), a semiconductor medium (such as a solid state disk (solid state disk, SSD)), etc.

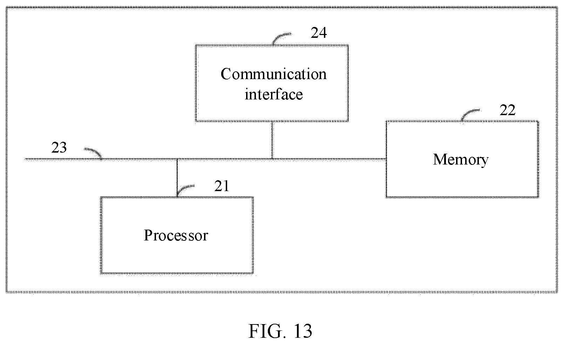

FIG. 13 is a schematic diagram of a structure of a head up display device, according to one or more embodiments of this application. As shown in FIG. 13, the head up display device in the embodiments may include a processor 21 and a memory 22, where the memory 22 is configured to store executable instructions of the processor 21; and the processor 21 is configured to execute the executable instructions to perform the augmented reality-head up display imaging method in the above-mentioned method embodiments.

Optionally, the memory 22 may be independent, or may be integrated with the processor 21.

When the memory 22 is a component independent of the processor 21, the head up display device in the embodiments may further include: a bus 23, configured to connect the memory 22 and the processor 21.

Optionally, the head up display device in the embodiments may further include a communication interface 24, where the communication interface 24 can be connected to the processor 21 through the bus 23.

This application further provides a computer-readable storage medium. The computer-readable storage medium stores computer executable instructions. When the computer executable instructions run on a computer, the computer is enabled to perform the augmented reality-head up display imaging method according to the above-mentioned embodiments.

One or more embodiments of this application further provide a computer program product, including a computer program. The computer program implements the augmented reality-head up display imaging method according to the above embodiments when executed by a processor.

In the descriptions of this specification, descriptions provided with reference to terms such as "an embodiment", "some embodiments", "an example", "a specific example", or "some examples" intend to mean that a specific feature, structure, material, or characteristic described with reference to the embodiment or example is included in at least one embodiment or example of the embodiments of this application. In this specification, illustrative expressions of the above-mentioned terms are not necessarily intended for the same embodiment or example. In addition, the described specific feature, structure, material, or characteristic can be combined in a proper way in any one or more embodiments or examples. Moreover, a person skilled in the art can combine and associate different embodiments or examples and features of different embodiments or examples described in this specification, provided that the embodiments or examples and the features do not conflict with each other.

Although the embodiments of this application have been illustrated and described, it can be understood that the above-mentioned embodiments are merely examples and cannot be understood as a limitation to this application, and a person of ordinary skill in the art may make various changes, modifications, replacements, and variations to the above-mentioned embodiments within the scope of this application.

**Claims**

1. An augmented reality-head up display imaging method, comprising:

   obtaining information about a target object;
   obtaining coordinates, of a current human eye point, in a head up display device coordinate system;
   determining, based on the coordinates of the current human eye point, coordinates of a center point of a virtual image display region, and the parameter of the virtual image display region, a parameter of a near plane used for imaging, wherein the near plane is coplanar with a plane of the virtual image display region, and the coordinates of the center point of the virtual image display region and the parameter of the virtual image display region are determined based on an optical-mechanical parameter of a head up display device;
   generating a virtual image of the target object through OpenGL imaging based on the coordinates of the current human eye point, the parameter of the near plane, and the information about a target object; and
   displaying the virtual image of the target object in the virtual image display region based on the coordinates of the center point of the virtual image display region, the parameter of the virtual image display region, and the parameter of the near plane.

**2.** The method according to claim 1, wherein the parameter of the virtual image display region comprises a normal line of the plane of the virtual image display region and a size of the virtual image display region, and the parameter of the near plane comprises coordinates of a center point of the near plane and a size of the near plane; and the determining, based on the coordinates of the current human eye point, coordinates of a center point of a virtual image display region, and the parameter of the virtual image display region, a parameter of a near plane used for imaging comprises:

determining coordinates of a projection point of the current human eye point in the plane of the virtual image display region based on the coordinates of the current human eye point, the coordinates of the center point of the virtual image display region, and the normal line of the plane of the virtual image display region, and determining the coordinates of the projection point of the current human eye point in the plane of the virtual image display region as the coordinates of the center point of the near plane; and
determining the size of the near plane based on the size of the virtual image display region, the coordinates of the center point of the virtual image display region, and the coordinates of the center point of the near plane.

**3.** The method according to claim 2, wherein the determining coordinates of a projection point of the current human eye point in the plane of the virtual image display region based on the coordinates of the current human eye point, the coordinates of the center point of the virtual image display region, and the normal line of the plane of the virtual image display region comprises:

constructing a plane equation of the virtual image display region based on the normal line of the plane of the virtual image display region, the coordinates of the center point of the virtual image display region, and the coordinates, to be determined, of the projection point of the current human eye point in the plane of the virtual image display region;
obtaining, based on the normal line of the plane of the virtual image display region, the coordinates of the current human eye point, and the coordinates, to be determined, of the projection point of the current human eye point in the plane of the virtual image display region, a linear equation constructed by the current human eye point and the projection point of the current human eye point in the plane of the virtual image display region; and
solving the plane equation of the virtual image display region and the linear equation, to obtain the coordinates of the projection point of the current human eye point in the plane of the virtual image display region.

**4.** The method according to claim 2, wherein the determining the size of the near plane based on the size of the virtual image display region, the coordinates of the center point of the virtual image display region, and the coordinates of the center point of the near plane comprises:

obtaining the size of the near plane based on the size of the virtual image display region, the coordinates of the center point of the virtual image display region, and the coordinates of the center point of the near plane through the following equation, wherein the size of the near plane comprises a width and a height of the near plane;
the width of the near plane is: $2 |BC| \cos\theta$ + a width of the virtual image display region;
the height of the near plane is: $2 |BC| \sin\theta$ + a height of the virtual image display region; and
$|BC|$ is a modulus of a vector constructed by the center point C of the virtual image display region and the center point B of the near plane, and $\theta$ is an included angle between the vector and a horizontal coordinate axis of the near plane.

**5.** The method according to any one of claims 1 to 4, wherein the parameter of the near plane comprises the coordinates of the center point of the near plane and the size of the near plane; and the generating a virtual image of the target object through OpenGL imaging based on the coordinates of the current human eye point, the parameter of the near plane, and the information about a target object comprises:

obtaining, based on the coordinates of the current human eye point, virtual image resolution, the coordinates of the center point of the near plane, the size of the near plane, and a normal line of the near plane, a view frustum used for OpenGL imaging; and
generating the virtual image of the target object by using the view frustum based on the information about a target object.

**6.** The method according to any one of claims 1 to 4, wherein the displaying the virtual image of the target object in the virtual image display region based on the coordinates of the center point of the virtual image display region, the parameter of the virtual image display region, and the parameter of the near plane comprises:

determining a position relationship between the center point of the virtual image display region and the center point of the near plane based on the coordinates of the center point of the virtual image display region and the coordinates of the center point of the near plane;

obtaining, through tailoring based on the position relationship between the center point of the virtual image display region and the center point of the near plane, a target virtual image that has the same size as the virtual image display region from the virtual image of the target object, wherein the center point of the virtual image display region is a center point of the target virtual image; and

displaying the target virtual image in the virtual image display region.

7. The method according to claim 6, wherein the determining a position relationship between the center point of the virtual image display region and the center point of the near plane based on the coordinates of the center point of the virtual image display region and the coordinates of the center point of the near plane comprises:

establishing a uv coordinate system by using a vertex at an upper left corner of the near plane as an origin of coordinates and using a right side of the origin of coordinates as a u axis positive direction and a lower part of the origin of coordinates as a v axis positive direction; and

determining the position relationship between the center point of the virtual image display region and the center point of the near plane based on the coordinates of the center point of the virtual image display region and the coordinates of the center point of the near plane; and

the obtaining, through tailoring based on the position relationship between the center point of the virtual image display region and the center point of the near plane, a target virtual image that has the same size as the virtual image display region from the virtual image of the target object comprises:

performing tailoring starting from the origin of coordinates if the center point of the near plane is located in a lower right part of the center point of the virtual image display region, to obtain, through tailoring, the target virtual image from the virtual image of the target object;

performing tailoring starting from first coordinates of the near plane if the center point of the near plane is located in an upper right part of the center point of the virtual image display region, to obtain, through tailoring, the target virtual image from the virtual image of the target object, wherein the first coordinates are (0, h-ih), h is the height of the near plane, and ih is the height of the virtual image display region;

performing tailoring starting from second coordinates of the near plane if the center point of the near plane is located in an upper left part of the center point of the virtual image display region, to obtain, through tailoring, the target virtual image from the virtual image of the target object, wherein the second coordinates are (w-iw, h-ih), w is the height of the near plane, and iw is the height of the virtual image display region;

performing tailoring starting from third coordinates of the near plane if the center point of the near plane is located in a lower left part of the center point of the virtual image display region, to obtain, through tailoring, the target virtual image from the virtual image of the target object, wherein the third coordinates are (w-iw, 0); or

determining the virtual image of the target object as the target virtual image if the center point of the near plane coincides with the center point of the virtual image display region.

8. The method according to any one of claims 1 to 4, wherein the obtaining coordinates, of a current human eye point, in a head up display device coordinate system comprises:

obtaining coordinates, of the current human eye point, in a sensor coordinate system through a sensor; and

rotating and translating the coordinates, of the current human eye point, in the sensor coordinate system based on a rotation matrix and a translation matrix that are between the sensor coordinate system and the head up display device coordinate system, to obtain the coordinates, of the current human eye point, in the head up display device coordinate system.

9. An augmented reality-head up display imaging apparatus, comprising:

a first acquisition module configured to obtain information about a target object;

a second acquisition module configured to obtain coordinates, of a current human eye point, in a head up display device coordinate system;

a determining module configured to determine, based on the coordinates of the current human eye point, coordinates of a center point of a virtual image display region, and the parameter of the virtual image display region, a parameter of a near plane used for imaging, wherein the near plane is coplanar with a plane of the virtual image display region, and the coordinates of the center point of the virtual image display region and the parameter of the virtual image display region are determined based on an optical-mechanical parameter of a head up display device;

a generation module configured to generate a virtual image of the target object based on the coordinates of the current human eye point, the parameter of the near plane, and the information about a target object; and

a display module configured to display the virtual image of the target object in the virtual image display region based on the coordinates of the center point of the virtual image display region, the parameter of the virtual image display region, and the parameter of the near plane.

10. Ahead up display device, comprising:

a processor; and
a memory configured to store executable instructions in the processor, wherein
the processor is configured to perform the augmented reality-head up display imaging method according to any one of claims 1 to 8 by executing the executable instructions.

11. A computer-readable storage medium, storing a computer program, wherein the computer program implements the augmented reality-head up display imaging method according to any one of claims 1 to 8 when executed by a processor.

FIG. 1

FIG. 2

| | |
|---|---|
| Obtain information about a target object | S101 |

| | |
|---|---|
| Obtain coordinates, of a current human eye point, in a head up display device coordinate system | S102 |

| | |
|---|---|
| Determine, based on the coordinates of the current human eye point, coordinates of a center point of a virtual image display region, and a parameter of the virtual image display region, a parameter of a near plane used for imaging, where the near plane is coplanar with a plane of the virtual image display region, and the coordinates of the center point of the virtual image display region and the parameter of the virtual image display region are determined based on an optical-mechanical parameter of a head up display device | S103 |

| | |
|---|---|
| Generate a virtual image of the target object through OpenGL imaging based on the coordinates of the current human eye point, the parameter of the near plane, and the information about a target object | S104 |

| | |
|---|---|
| Display the virtual image of the target object in the virtual image display region | S105 |

FIG. 3

FIG. 4

FIG. 5

FIG. 6

FIG. 7

FIG. 8

EP 4 343 408 A1

FIG. 9

FIG. 10

FIG. 11

FIG. 12

23

FIG. 13

| | Europäisches Patentamt European Patent Office Office européen des brevets | **EUROPEAN SEARCH REPORT** | Application Number EP 23 19 5681 |

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2021/165220 A1 (NAKADA TAKUMI [JP] ET AL) 3 June 2021 (2021-06-03) * paragraphs [0106], [0109], [0111] * * figures 1-8 * ----- | 1-11 | INV. G02B27/01 |

TECHNICAL FIELDS SEARCHED (IPC)

G02B

The present search report has been drawn up for all claims

| Place of search | Date of completion of the search | Examiner |
|---|---|---|
| Munich | 9 February 2024 | Bodin, Carl-Magnus |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
..........................................................................
& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 23 19 5681

This annex lists the patent family members relating to the patent documents cited in the above-mentioned European search report.
The members are as contained in the European Patent Office EDP file on
The European Patent Office is in no way liable for these particulars which are merely given for the purpose of information.

09-02-2024

| Patent document cited in search report | | Publication date | Patent family member(s) | | Publication date |
|---|---|---|---|---|---|
| US 2021165220 | A1 | 03-06-2021 | CN | 111433067 A | 17-07-2020 |
| | | | CN | 116620019 A | 22-08-2023 |
| | | | CN | 116620020 A | 22-08-2023 |
| | | | JP | 6870109 B2 | 12-05-2021 |
| | | | JP | WO2019097918 A1 | 19-11-2020 |
| | | | US | 2021165220 A1 | 03-06-2021 |
| | | | WO | 2019097918 A1 | 23-05-2019 |

EPO FORM P0459

For more details about this annex : see Official Journal of the European Patent Office, No. 12/82